(19) Europäisches Patentamt
European Patent Office
Office européen des brevets

(11) **EP 4 476 726 B1**

(12) **EUROPEAN PATENT SPECIFICATION**

(45) Date of publication and mention
of the grant of the patent:
**04.02.2026 Bulletin 2026/06**

(21) Application number: **23711649.6**

(22) Date of filing: **20.02.2023**

(51) International Patent Classification (IPC):
*G10L 25/30* (2013.01)     *G10L 25/84* (2013.01)

(52) Cooperative Patent Classification (CPC):
**G10L 25/30; G10L 25/84**

(86) International application number:
**PCT/US2023/062887**

(87) International publication number:
**WO 2023/183684 (28.09.2023 Gazette 2023/39)**

(54) **MICROPHONE ARRAY CONFIGURATION INVARIANT, STREAMING, MULTICHANNEL NEURAL ENHANCEMENT FRONTEND FOR AUTOMATIC SPEECH RECOGNITION**

MIKROFONARRAYKONFIGURATIONSINVARIANTES, STREAMING-, MEHRKANAL-NEURONALE ERWEITERUNGS-FRONTEND FÜR AUTOMATISCHE SPRACHERKENNUNG

INVARIANT DE CONFIGURATION DE RÉSEAU DE MICROPHONES, DIFFUSION EN CONTINU, FRONTALE D'AMÉLIORATION NEURONALE MULTICANAL POUR UNE RECONNAISSANCE VOCALE AUTOMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.03.2022 US 202263269633 P**

(43) Date of publication of application:
**18.12.2024 Bulletin 2024/51**

(73) Proprietor: **Google LLC**
**Mountain View, CA 94043 (US)**

(72) Inventors:
• **CAROSELLI, Joseph**
**Mountain View, California 94043 (US)**
• **NARAYANAN, Arun**
**Mountain view, California 94043 (US)**
• **O'MALLEY, Tom**
**Mountain View, California 94043 (US)**

(74) Representative: **Shipp, Nicholas et al**
**Kilburn & Strode LLP**
**Lacon London**
**84 Theobalds Road**
**London WC1X 8NL (GB)**

(56) References cited:
**WO-A1-2021/013345**

• **LIM WOOTAEK ET AL: "Multi-level Stereo Attention Model for Center Channel Extraction", 2019 IEEE INTERNATIONAL SYMPOSIUM ON BROADBAND MULTIMEDIA SYSTEMS AND BROADCASTING (BMSB), IEEE, 5 June 2019 (2019-06-05), pages 1 - 4, XP033697692, DOI: 10.1109/BMSB47279.2019.8971885**
• **WANG ZHONG-QIU ET AL: "All-Neural Multi-Channel Speech Enhancement", INTERSPEECH 2018, 1 January 2018 (2018-01-01), ISCA, pages 3234 - 3238, XP093044642, Retrieved from the Internet <URL:https://isca-speech.org/archive/pdfs/interspeech_2018/wang18h_interspeech.pdf> [retrieved on 20230505], DOI: 10.21437/Interspeech.2018-1664**

**Description**

TECHNICAL FIELD

This disclosure relates to a microphone array configuration invariant, streaming, multichannel neural enhancement frontend for automatic speech recognition.

BACKGROUND

Robustness of automatic speech recognition (ASR) systems has significantly improved over the years with the advent of neural network-based end-to-end models, large-scale training data, and improved strategies for augmenting training data. Nevertheless, various conditions such as reverberation, significant background noise, and competing speech significantly deteriorate performance of ASR systems. A joint ASR model may be trained to handle these conditions. However, isolating speech in background conditions including speech-based noise and non-speech based noise is particularly challenging. Document WO2021/013345A1 discloses a speech enhancement method using self attentive layers for ASR applications. However, in this work, the de-noising modules are trained independently from the ASR modules.

SUMMARY

The invention is solely defined by the appended claims. One aspect of the present disclosure provides a multichannel neural frontend speech enhancement model for speech recognition that includes a speech cleaner, a stack of self-attention blocks each having a multi-headed self attention mechanism, and a masking layer. The speech cleaner receives, as input, a multichannel noisy input signal and a multichannel contextual noise signal, and generates, as output, a single channel cleaned input signal. The stack of self-attention blocks receives, as input, at an initial block of the stack of self-attention blocks, a stacked input including the single channel cleaned input signal output from the speech cleaner and a single channel noisy input signal, and generates, as output, from a final block of the stack of self-attention blocks, an un-masked output. The masking layer receives, as input, the single channel noisy input signal and the un-masked output generated as output from the final block of the stack of self-attention blocks, and generates, as output, enhanced input speech features corresponding to a target utterance.

Implementations of the disclosure may include one or more of the following optional features. In some implementations, the stack of self-attention blocks includes a stack of Conformer blocks. In these implementations, the stack of Conformer blocks may include four Conformer blocks. In some examples, the speech enhancement model executes on data processing hardware residing on a user device. Here, the user device is configured to capture the target utterance and the multichannel contextual noise signal via an array of microphones of the user device. In these examples, the speech enhancement model may be agnostic to a number of microphones in the array of microphones.

In some implementations, the speech cleaner executes an adaptive noise cancelation algorithm to generate the single channel cleaned input signal by applying a finite impulse response (FIR) filter on all channels of the multichannel noisy input signal except for a first channel of the multichannel noisy input signal to generate a summed output, and subtracting the summed output from the first channel of the multichannel noisy input signal. In some examples, a backend speech system is configured to process the enhanced input speech features corresponding to the target utterance. In these examples, the backend speech system includes at least one of an automatic speech recognition (ASR) model or an audio or audio-video calling application.

In some implementations, the speech enhancement model is trained jointly with a backend automatic speech recognition (ASR) model using a spectral loss and an ASR loss. In these implementations, the spectral loss may be based on an L1 loss function and L2 loss function distance between an estimated ratio mask and an ideal ratio mask. Here, the ideal ratio mask is computed using reverberant speech and reverberant noise. Additionally or alternatively, the ASR loss is computed by generating, using an ASR encoder of the ASR model configured to receive enhanced speech features predicted by the speech enhancement model for a training utterance as input, predicted outputs of the ASR encoder for the enhanced speech features, generating, using the ASR encoder configured to receive target speech features for the training utterance as input, target outputs of the ASR encoder for the target speech features. Here, computing the ASR loss is based on the predicted outputs of the ASR encoder for the enhanced speech features and the target outputs of the ASR encoder for the target speech features.

Another aspect of the disclosure provides a computer-implemented method that when executed on data processing hardware causes the data processing hardware to perform operations that include receiving a multichannel noisy input signal and a multichannel contextual noise signal, and generating, using a speech cleaner of a speech enhancement model, a single channel cleaned input signal. The operations also include generating, as output from a stack of self-attention blocks of the speech enhancement model configured to receive a stacked input including the single channel cleaned input signal output from the speech cleaner and a single channel noisy input signal, an un-masked output. Here, each self-attention block in the stack of self-attention blocks includes a multi-headed self attention mechanism. The operations further include generating, using a masking layer of the speech enhancement model configured to receive the single channel noisy input signal and the un-masked output generated as output from the stack of self-attention blocks, enhanced input speech features corresponding to a target utterance.

This aspect may include one or more of the following optional features. In some implementations, the stack of self-attention blocks includes a stack of Conformer blocks. In these implementations, the stack of Conformer blocks may include four Conformer blocks. In some examples, the speech cleaner, the stack of self-attention blocks, and the masking layer execute on the data processing hardware residing on a user device. Here, the user device is configured to capture the target utterance and the multichannel contextual noise signal via an array of microphones of the user device. In these examples, the speech enhancement model may be agnostic to a number of microphones in the array of microphones.

In some implementations, the operations further include executing, using the speech cleaner, an adaptive noise cancelation algorithm to generate the single channel cleaned input signal by applying a finite impulse response (FIR) filter on all channels of the multichannel noisy input signal except for a first channel of the multichannel noisy input signal to generate a summed output, and subtracting the summed output from the first channel of the multichannel noisy input signal. In some examples, a backend speech system is configured to process the enhanced input speech features corresponding to the target utterance. In these examples, the backend speech system includes at least one of an automatic speech recognition (ASR) model or an audio or audio-video calling application.

In some implementations, the speech enhancement model is trained jointly with a backend automatic speech recognition (ASR) model using a spectral loss and an ASR loss. In these implementations, the spectral loss may be based on an L1 loss function and L2 loss function distance between an estimated ratio mask and an ideal ratio mask. Here, the ideal ratio mask is computed using reverberant speech and reverberant noise. Additionally or alternatively, the ASR loss is computed by generating, using an ASR encoder of the ASR model configured to receive enhanced speech features predicted by the speech enhancement model for a training utterance as input, predicted outputs of the ASR encoder for the enhanced speech features, generating, using the ASR encoder configured to receive target speech features for the training utterance as input, target outputs of the ASR encoder for the target speech features. Here, computing the ASR loss is based on the predicted outputs of the ASR encoder for the enhanced speech features and the target outputs of the ASR encoder for the target speech features.

The details of one or more implementations of the disclosure are set forth in the accompanying drawings and the description below. Other aspects, features, and advantages will be apparent from the description and drawings, and from the claims.

DESCRIPTION OF DRAWINGS

FIG. 1 is a schematic view of a system that includes a user communicating a spoken target utterance to a speech-enabled user device.
FIG. 2 is a schematic view of a multichannel neural frontend speech enhancement model of FIG. 1.
FIG. 3 is a schematic view of a speech cleaner of the multichannel neural frontend speech enhancement model.
FIG. 4 is a schematic view of a self-attention conformer block of the multichannel neural frontend speech enhancement model.
FIG. 5 is a schematic view of an example training process for jointly training a contextual frontend processing model and an automatic speech recognition model.
FIG. 6 is an example flowchart of an example arrangement of operations for a method of automatic speech recognition using a multichannel neural frontend speech enhancement model.
FIG. 7 is a schematic view of an example computing device that may be used to implement the systems and methods described herein.

Like reference symbols in the various drawings indicate like elements.

DETAILED DESCRIPTION

Robustness of automatic speech recognition (ASR) systems has significantly improved over the years with the advent of neural network-based end-to-end models, large-scale training data, and improved strategies for augmenting training data. Nevertheless, background interference can significantly deteriorate the ability of ASR systems to accurately recognize speech directed toward the ASR system. Background interference can be broadly classified into three groups: device echo; background noise; and competing speech. While separate ASR models may be trained to handle each of these background interference groups in isolation, the difficulty in maintaining multiple task/condition-specific ASR models and switching between the models on the fly during use is not practical.

Device echo may correspond to playback audio output from devices, such as smart home speakers, whereby the playback audio is recorded as echo and can affect performance of a backend speech system, such as an ASR system. Particularly, degradation of performance of the backend speech system is especially severe if the playback audio contains audible speech, e.g., a text-to-speech (TTS) response from a digital assistant.

Background noise with non-speech characteristics is usually well handled using data augmentation strategies like multi-style training (MTR) of the ASR models. Here, a room simulator is used to add noise to the training data, which is then carefully weighted with clean data during training to get a good balance in performance between clean and noisy conditions. As a result, large scale ASR models are robust to moderate levels of non-speech noise. However, background noise can still affect performance of backend speech systems in the presence of low signal-to-noise ratio (SNR) conditions.

Unlike non-speech background noise, competing speech is quite challenging for ASR models that are trained to recognize a single speaker. Training ASR models with multi-talker speech can pose problems in itself, since it is hard to disambiguate which speaker to focus on during inference. Using models that recognize multiple speakers is also sub-optimal since it is hard to know ahead of time how many users to support. Furthermore, such multi-speaker models typically have degraded performance in single-speaker settings, which is undesirable.

The three aforementioned classes of background interference have typically been addressed in isolation of one another, each using separate modeling strategies. Speech separation has received a lot of attention in the recent literature using techniques like deep clustering, permutation invariant training, and using speaker embeddings. When using speaker embeddings, the target speaker of interest is assumed to be known a priori. Techniques developed for speaker separation have also been applied to remove non-speech noise, with modifications to the training data. Acoustic Echo Cancelation (AEC) has also been studied in isolation or together in the presence of background noise. It is well known that improving speech quality does not always improve ASR performance since the distortions introduced by non-linear processing can adversely affect ASR performance. One way to mitigate discrepancies between an enhancement frontend initially processing incoming audio and the resulting ASR performance is to jointly train the enhancement frontend together with the backend ASR model.

Moreover, as the application of large scale multi-domain and multi-lingual ASR models continues to gain interest, the training data for these ASR models typically covers various acoustic and linguistic use cases (e.g., voice search and video captioning), thereby making it challenging to simultaneously address harsher noise conditions. As a result, it is often convenient to train and maintain separate frontend feature processing models capable of handling adverse conditions, without combining it with the backend ASR model.

Implementations herein are directed toward training a frontend speech enhancement model for improving robustness of ASR. The model is practical from the standpoint that it is difficult, if not impossible, to know what class of background interference to address ahead of time, particularly in a streaming ASR setting. Specifically, the frontend speech enhancement model includes a contextual enhancement neural network (CENN) capable of making use of a multichannel noisy input signal and a multichannel contextual noise signal. For speech enhancement and separation, the noise context, i.e., a few seconds of audio before the target utterance to be recognized, carries useful information about the acoustic context. The CENN employs a respective neural network architecture configured to ingest the noisy input and the contextual input to produce enhanced input speech features that may be passed to a backend speech system, such as, an ASR model that may process the enhanced input speech features to generate a speech recognition result for the target utterance. Notably, though the frontend speech enhancement model is designed to operate with a multi-channel array, the frontend speech enhancement model itself is agnostic as to the number of channels in the array or their configuration.

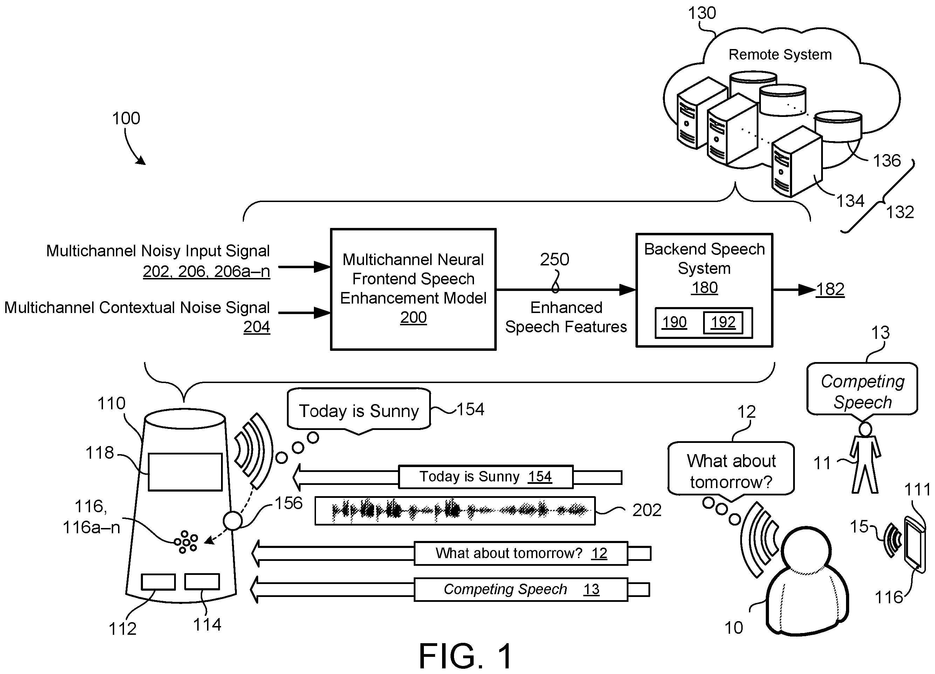

Referring to FIG. 1, in some implementations, a system 100 includes a user 10 communicating a spoken target utterance 12 to a speech-enabled user device 110 (also referred to as a device 110 or a user device 110) in a speech environment. The user 10 (i.e., speaker of the utterance 12) may speak the target utterance 12 as a query or a command to solicit a response from the device 110. The device 110 is configured to capture sounds from one or more users 10, 11 within the speech environment. Here, the audio sounds may refer to a spoken utterance 12 by the user 10 that functions as an audible query, a command for the device 110, or an audible communication captured by the device 110. Speech-enabled systems of the device 110 or associated with the device 110 may field the query for the command by answering the query and/or causing the command to be performed.

Various types of background interference may interfere with the ability of a backend speech system 180 to process the target utterance 12 that specifies the query or command for the device 110. As aforementioned, the background interference may include one or more of a device echo corresponding to playback audio 154 output from the user device (e.g., a smart speaker) 110, competing speech 13 such as utterances other than the target utterance 12 spoken by one or more other users 11 that are not directed toward the device 110, and background noise with non-speech characteristics such as a ringtone 15 from a separate user device 111. Implementations herein employ a multichannel neural frontend speech enhancement model 200 (also referred to as a model 200 or a frontend speech enhancement model 200) that executes on the device 110 and is configured to receive, as input, a multichannel noisy input signal 202 including speech features corresponding to the target utterance 12 and the background interference, and a multichannel contextual noise signal 204 and generate, as output, enhanced input speech features 250 corresponding to the target utterance 12 by processing the multichannel noisy input signal 202 and the multichannel contextual noise signal 204 to remove the background interference. The multichannel noisy input signal 202 includes one or more channels 206, 206a-n of audio. A backend speech system 180 may then process the enhanced input speech features 250 to generate an output 182. Notably, the multichannel neural frontend speech enhancement model 200 effectively removes (i.e., masks) the presence of background interference recorded by the device 110 when the user 10 spoke the target utterance 12 such that the enhanced input speech features 250 provided to the backend speech system 180 convey the speech (i.e., target utterance 12) that was intended for the device 110 so that the output 182 generated by the backend speech system 180 is not degraded by the background interference.

In the example shown, the backend speech system 180 includes an ASR system 190 that employs an ASR model 192 to process the enhanced input speech features 250 to generate a speech recognition result (e.g., transcription) for the target utterance 12. The ASR system 190 may further include a natural language understanding (NLU) module (not shown) that performs semantic interpretation on the transcription of the target utterance 12 to identify the query/command directed toward the device 110. As such, the output 182 from the backend speech system 180 may include the transcription and/or instructions to fulfill the query/command identified by the NLU module.

The backend speech system 180 may additionally or alternatively include a hotword detection model (not shown) configured to detect whether or not the enhanced input speech features 250 include a presence of one or more hotwords/warm words the hotword detection model is trained to detect. For instance, the hotword detection model may output a hotword detection score indicating a likelihood that the enhanced input speech features 250 corresponding to the target utterance 12 include a particular hotword/warm word. Detection of a hotword may trigger a wake-up process that causes the device 110 to wake-up from a sleep state. For instance, the device 110 may wake-up and process the hotword and/or one or more terms preceding/following the hotword.

In additional examples, the background speech system 180 includes an audio or audio-video calling application (e.g., a video conferencing application). Here, the enhanced input speech features 250 corresponding to the target utterance 12 are used by the audio or audio-video calling application to filter the voice of the target speaker 10 for communications to recipients during an audio or audio-video communication session. The background speech system 180 may additionally or alternatively include a speaker identification model configured to perform speaker identification using the enhanced input speech features 250 to identify the user 10 that spoke the target utterance 12.

In the example shown, the device 110 captures the multichannel noisy input signal 202 (also referred to as audio data) of the target utterance 12 spoken by the user 10 in the presence of background interference emanating from one or more sources other than the user 10. The multichannel noisy input signal 202 includes one or more single channel noisy input signals 206, 206a-n of audio. The device 110 may correspond to any computing device associated with the user 10 and capable of receiving multichannel noisy input signals 202. Some examples of user devices 110 include, but are not limited to, mobile devices (e.g., mobile phones, tablets, laptops, etc.), computers, wearable devices (e.g., smart watches, smart headphones, etc.), smart appliances, and internet of things (IoT) devices, smart speakers, etc. The device 110 includes data processing hardware 112 and memory hardware 114 in communication with the data processing hardware 112 and storing instructions, that when executed by the data processing hardware 112, cause the data processing hardware 112 to perform one or more operations. The multichannel neural frontend speech enhancement model 200 may execute on the data processing hardware 112. In some examples, the backend speech system 180 executes on the data processing hardware 112.

In some examples, the device 110 includes one or more applications (i.e., software applications) where each application may utilize enhanced input speech features 250 generated by the multichannel neural frontend speech enhancement model 200 to perform various functions within the application. For instance, the device 110 includes an assistant application configured to communicate synthesized playback audio 154 to the user 10 to assist the user 10 with various tasks.

The user device 110 further includes (or is in communication with) an audio subsystem with an array of audio capturing devices (e.g., microphones) 116, 116a-n for capturing and converting spoken utterances 12 within the speech environment into electrical signals and a speech output device (e.g., a speaker) 118 for communicating an audible audio signal (e.g., a synthesized playback audio 154 from the device 110). Each microphone 116 in the array of microphones 116 of the user device 110 may separately record the utterance 12 on a separate dedicated channel 206 of the multichannel noisy input signal 202. For example, the user device 110 may include two microphones 116 that each record the utterance 12, and the recordings from the two microphones 116 may be combined into a two-channel noisy input signal 202 (i.e., stereophonic audio or stereo). That is, the two microphones reside on the user device 110. In some examples, the user device 110 includes more than two microphones 116. Additionally or alternatively, the user device 102 may be in communication with two or more microphones 116 separate/remote from the user device 110. For example, the user device 110 may be a mobile device disposed within a vehicle and in wired or wireless communication (e.g., Bluetooth) with two or more microphones 116 of the vehicle. In some configurations, the user device 110 is in communication with least one microphone 116 residing on a separate device 111, which may include, without limitation, an in-vehicle audio system, a computing device, a speaker, or another user device. In these configurations, the separate device 111 may also be in communication with the one or more microphones 116 residing on the user device 110.

In some examples, the device 110 is configured to communicate with a remote system 130 via a network (not shown). The remote system 130 may include remote resources 132, such as remote data processing hardware 134 (e.g., remote servers or CPUs) and/or remote memory hardware 136 (e.g., remote databases or other storage hardware). The device 110 may utilize the remote resources 132 to perform various functionality related to speech processing and/or synthesized playback communication. The multichannel neural frontend speech enhancement model 200 and the backend speech system 180 may reside on the device 110 (referred to as on-device systems) or reside remotely (e.g., reside on the remote system 130), but in communication with the device 110. In some examples, one or more backend speech systems 180 reside locally or on-device while one or more other backend speech systems 180 reside remotely. In other words, one or more backend speech systems 180 leveraging the enhanced input speech features 250 output from the multichannel neural frontend speech enhancement model 200 may be local or remote in any combination. For instance, when a system 180 is rather large in size or processing requirements, the system 180 may reside in the remote system 130. Yet when the device 110 may support the size or the processing requirements of one or more systems 180, the one or more systems 180 may reside on the device 110 using the data processing hardware 112 and/or the memory hardware 114. Optionally, the one or more of the systems 180 may reside on both locally/on-device and remotely. For instance, a backend speech system 180 may default to execute on the remote system 130 when a connection between the device 110 and remote system 130 is available, but when the connection is lost or unavailable, the system 180 instead executes locally on the device 110.

In some implementations, the device 110 or a system associated with the device 110 identifies text that the device 110 will communicate to the user 10 as a response to a query spoken by the user 10. The device 110 may then use a text-to-speech (TTS) system to convert the text into corresponding synthesized playback audio 154 for the device 110 to communicate to the user 10 (e.g., audibly communicate to the user 10) as the response to the query. Once generated, the TTS system communicates the synthesized playback audio 154 to the device 110 to allow the device 110 to output the synthesized playback audio 154. For instance, the device 110 outputs the synthesized playback audio 154 of "today is sunny" at a speaker 118 of the device 110 responsive to the user 10 providing a spoken query for today's weather forecast.

With continued reference to FIG. 1, when the device 110 outputs the synthesized playback audio 154, the synthesized playback audio 154 generates an echo 156 captured by the audio capturing device 116. The synthesized playback audio 154 corresponds to a reference audio signal. While synthesized playback audio 154 depicts a reference audio signal in the example of FIG. 1, the reference audio signal may include other types of playback audio 154 including media content output from the speaker 118 or a communication from a remote user the user 10 is conversing with (e.g., voice over IP call or video conferencing call) through the device 110. Unfortunately, in addition to the echo 156, the audio capturing device 116 may also be simultaneously capturing the target utterance 12 spoken by the user 10 that includes a follow-up query inquiring more about the weather, by stating "what about tomorrow?" For example, FIG. 1 depicts that, as the device 110 outputs the synthesized playback audio 154, the user 10 inquires more about the weather, in a spoken utterance 12 to the device 110, by stating "what about tomorrow?" Here, the spoken utterance 12 and the echo 156 are both captured at the audio capturing device 116 simultaneously to form the multichannel noisy input signal 202. In other words, the multichannel noisy input signal 202 includes an overlapped audio signal where some portion of the target utterance 12 spoken by the user 10 overlaps with some portion of the reference audio signal (e.g., synthesized playback audio) 154 output from the speaker 118 of the device 110. In addition to the synthesized playback audio 154, competing speech 13 spoken by another user 11 in the environment, as well as non-speech characteristics such as a ringtone 15 from a separate user device 111 may also be captured by the audio capturing device 116 and contribute to background interference that overlaps with the target utterance 12.

In FIG. 1, the backend speech system 180 may have issues processing the target utterance 12 corresponding to the follow-up weather query "what about tomorrow?" in the multichannel noisy input signal 202 due to the presence of the background interference attributed to at least one of the playback audio 154, competing speech 13, or non-speech background noise 15 interfering with target utterance 12. The multichannel neural frontend speech enhancement model 200 is employed to improve robustness of the backend speech system 180 by effectively removing (i.e., masking) the presence of the background interference recorded by the device 110 when the user 10 spoke the target utterance 12.

The model 200 may perform speech enhancement by applying noise context modeling where the speech cleaner 300 of the model 200 processes the multichannel contextual noise signal 204 associated with a predetermined duration of noise segments captured by the audio capturing device 116 prior to the target utterance 12 spoken by the user 10. In some examples, the predetermined duration includes six (6) seconds of noise segments. As such, the multichannel contextual noise signal 204 provides noise context. In some examples, the multichannel contextual noise signal 204 includes LFBE features of the noise context signal for use as contextual information.

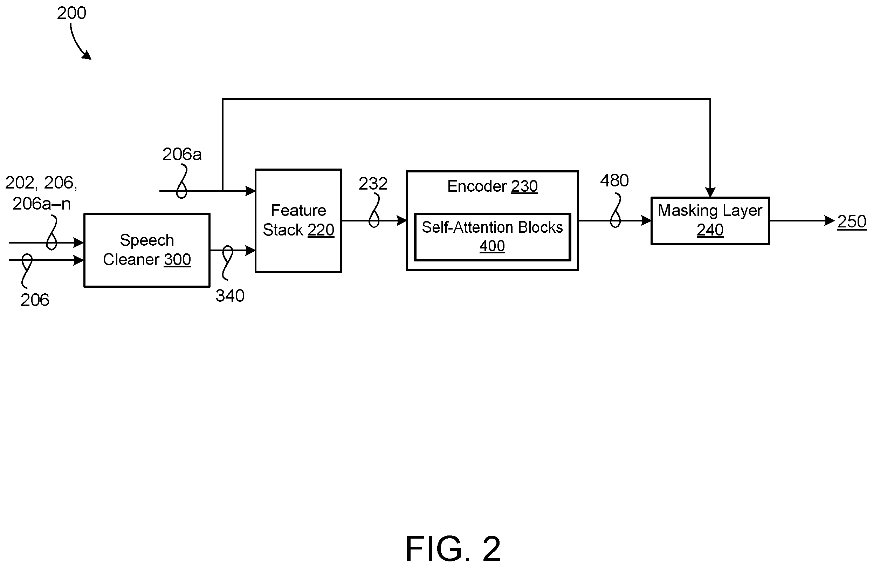

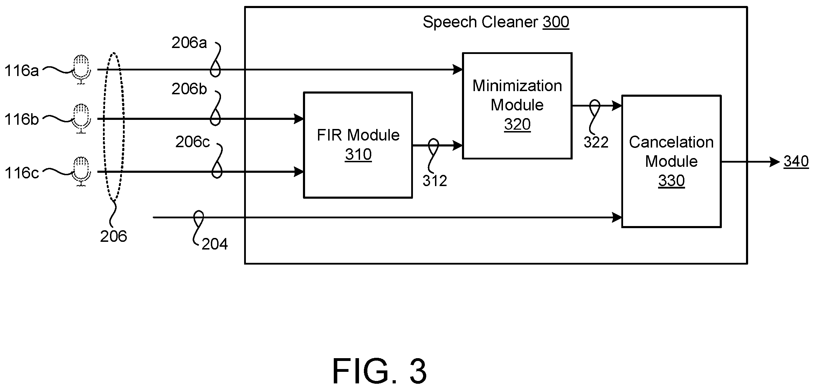

FIG. 2 shows the multichannel neural frontend speech enhancement model 200 of FIG. 1. The multichannel neural frontend speech enhancement model 200 uses a modified version of a conformer neural network architecture that combines convolution and self-attention to model short-range and long-range interactions. The model 200 includes a speech cleaner 300, a feature stack 220, an encoder 230, and a masking layer 240. The speech cleaner 300 may execute an adaptive noise cancelation algorithm (FIG. 3). The encoder 230 may include a stack of self-attention blocks 400.

The speech cleaner 300 may be configured to receive, as input, the multichannel noisy input signal 202 and the multichannel contextual noise signal 204 and generate, as output, a single channel cleaned input signal 340. Here, the speech cleaner 300 includes a finite impulse response (FIR) filter to process the multichannel noisy input signal 202.

FIG. 3 provides an example adaptive noise cancelation algorithm executed by the speech cleaner 300. Here, the speech cleaner 300 includes an FIR module 310 including an FIR filter, a minimization module 320, and a cancelation module 330.

In the example shown, for simplicity, the multichannel noisy input signal 202 includes three channels 206a-c each including respective audio features captured by a separate dedicated microphone 116a-c in an array of three microphones 116. However, as mentioned above, the frontend speech enhancement model 200 is agnostic to a number of microphones 116 in the array of microphones 116. In other words, the multichannel noisy input signal 202 can include one channel 206 captured by one microphone 116, two channels 206 captured by two microphones 116, or four or more channels 206 captured by four or more microphones 116 without departing from the scope of the present disclosure.

Here, the FIR module 310 applies the FIR filter on all channels 206 of the multichannel noisy input signal 202 except for a first channel 206a to generate a summed output 312. In other words, the FIR module 310 does not process the first channel 206a of the multichannel noisy input signal 202, but does apply the FIR filter on the second channel 206b and the third channel 206c of the multichannel noisy input signal 202 to generate the summed output 312. The minimization module 320 receives the summed output 312 and the first channel 206a and generates a minimized output 322 by subtracting the summed output 312 from the first channel 206a of the multichannel noisy input signal 202. Mathematically, the FIR filter includes a tapped delay line of length L of three (3) applied to the channels 206b, 206c but not the channel 206a, where determining the minimized output 322 may be expressed as follows:

$$Z_m(n) = Y_0(n) - \sum_{l=-}^{L-1} U_m{}^H \tilde{Y}_m(k, n - l) \quad (1),$$

where $\tilde{Y}_m$ is a vector of time delayed Short-time Fourier transform (STFT) processed input for the channels 206b, 206c and $U_m(k)$ is a vector of the filter coefficients to be applied to the channels 206b, 206c. $\tilde{Y}_m$ and $U_m(k)$ may be expressed as follows:

$$\tilde{Y}_m(n) = [Y_m(n), Y_m(n - 1), \cdots Y_m(n - (L - 1))]^T \quad (2)$$

$$U_m(k) = [U_m(k, 0), U_m(k, 1), \cdots U_m(k, N - 1)]^T \quad (3),$$

where the filter coefficients may minimize the power of the output as follows:

$$\hat{U}_m = arg \min_{U_m} E_n[|Z_m(n)|^2] \quad (4).$$

Because the speech cleaner 300 is implemented on the device 110, the cancelation module 330 may use the multichannel contextual noise signal 204 that occurs directly before the utterance 12 in the multichannel noisy input signal 202. In other words, the minimization module 320 generates the minimized output 322 through adaptation during the multichannel contextual noise signal 204 when the utterance 12 is not present in the multichannel noisy input signal 202. The adaptation may include a recursive least squares (RLS) algorithm. Once the speech cleaner 300 detects the utterance 12, the filter coefficients are frozen, where the cancelation module 330 applies the last coefficients before the utterance 12 to the multichannel noisy input signal 202 to cancel the background interference to produce the single channel cleaned input signal 340 as follows:

$$\hat{X}(n) = Y_0(n) - \sum_{l=0}^{L-1} \hat{U}_m^H \hat{Y}_m(k, n - 1) \quad (5).$$

Referring back to FIG. 2, the feature stack 220 is configured to receive, as input, the single channel cleaned input signal 340 and a single channel 206a of the multichannel noisy input signal 202, and generate a stacked input 232 including the single channel cleaned input signal 340 and the single channel 206a. The feature stack 220 may convert each of the single channel cleaned input signal 340 and the single channel 206a of the multichannel noisy input signal 202 into 128-dimension log-mel domains using a window size of 32 milliseconds (ms) with a step size of 10 ms. Here, four frames may be stacked with a 30 ms step upon input to the feature stack 220.

The encoder 230 receives the stacked input 232 including the single channel cleaned input signal 340 and the single channel 206a of the multichannel noisy input signal 202, and generates, as output, an un-masked output 480. The encoder 230 includes a stack of self-attention blocks 400 (also referred to as blocks 400). Here, an initial block 400 of the stack of self-attention blocks 400 receives the stacked input 232 including the single channel cleaned input signal 340 output from the speech cleaner 300 and the single channel 206 of the multichannel noisy input signal 202, and a final block 400 of the stack of self-attention blocks 400 generates the un-masked output 480.

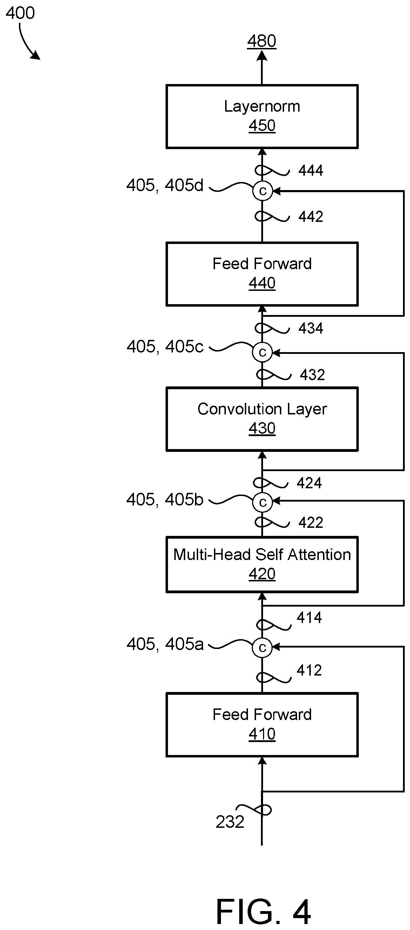

Each Conformer block 400 may include a feed-forward layer, a self-attention layer, a convolution layer, and a second feed-forward layer. In some implementations, the stack of self-attention blocks 400 includes a stack of Conformer blocks 400. In these implementations, the stack of Conformer blocks 400 includes four (4) layers of Conformer blocks 400 each with 1024 units, 8 attention heads, 15x1 convolutional kernel size, and 64 frames of self-attention to enable a streaming model. An example Conformer block 400 is described in greater detail below with reference to FIG. 4.

The masking layer 240 is configured to receive, as input, the un-masked output 480 output by the self-attention blocks 400 of encoder 230, and the single channel 206a of the multichannel noisy input signal 202 and generate, as output the enhanced input speech features 250 corresponding to the target utterance 12. In some implementations, the masking layer 240 of the model 200 includes a decoder (not shown) configured to decode the un-masked output 480 into the enhanced input speech features 250 corresponding to the target utterance 12. Here, the decoder may include a simple projection decoder having a single layer, frame-wise fully connected network with sigmoid activation.

FIG. 4 provides an example of a block 400 from the stack of self-attention blocks 400 of the encoder 230. The block 400 includes a first half feed-forward layer 410, a second half feed-forward layer 440, with a multi-head self-attention block 420 and a convolution layer 430 disposed between the first and second half feed-forward layers 410, 440, and concatenation operators 405, 405a-d. The first half feed-forward layer 410 processes the stacked input 232 including the single channel cleaned input signal 340 output from the speech cleaner 300 and the single channel noisy input signal 206a, and generates an output 412. Next, a first concatenation operator 405a concatenates the output 412 with the stacked input 232 to generate a first concatenated input 414. Subsequently, the multi-head self-attention block 420 receives the first concatenated input 414 and generates a noise summary 422. Intuitively, the role of the multi-head self-attention block 420 is to summarize noise context separately for each input frame that is to be enhanced.

Next, a second concatenation operator 405b concatenates the output noise summary 422 with the first concatenated input 414 to generate a second concatenated input 424. Subsequently, the convolution layer 430 subsamples the second concatenated input 424 including the noise summary 422 of the multi-head self-attention block 420 and the first concatenated input 414, and generates a convolutional output 432. Thereafter, a third concatenation operator 405c concatenates the convolutional output 432 with the second concatenated input 424 to generate a third concatenated input 434. The third concatenated input 434 is provided as input to the second half-feed forward layer 440, which generates an output 442. The output 442 of the second half-feed forward layer 440 is concatenated with the third concatenated input 434 by a fourth concatenation operator 405d to generate a fourth concatenated input 444. Finally, the layernorm module 450 processes the fourth concatenated input 444 from the second half feed-forward layer 440. Mathematically, the block 400 transforms input features x, using modulation features m, to produce output features y, as follows:

$$\hat{x} = x + r(m) \odot x + h(m)$$

$$\tilde{x} = \hat{x} + \frac{1}{2}\text{FFN}(\hat{x}), \tilde{n} = n + \frac{1}{2}\text{FFN}(n)$$

$$x' = \tilde{x} + \text{Conv}(\tilde{x}), n' = \tilde{n} + \text{Conv}(\tilde{n})$$

$$x'' = x' + \text{MHCA}(x', n')$$

$$x''' = x' \odot r(x'') + h(x'')$$

$$x'''' = x' + \text{MHCA}(x', x''')$$

$$y = \text{LayerNorm}\left(x'''' + \frac{1}{2}\text{FFN}(x'''')\right) \qquad (6).$$

The block 400 generates, as an output, the un-masked output 480, which is passed on to the next layer of the self-attention blocks 400. Thus, the inputs 240, 206 are modulated by each of the self-attention blocks 400.

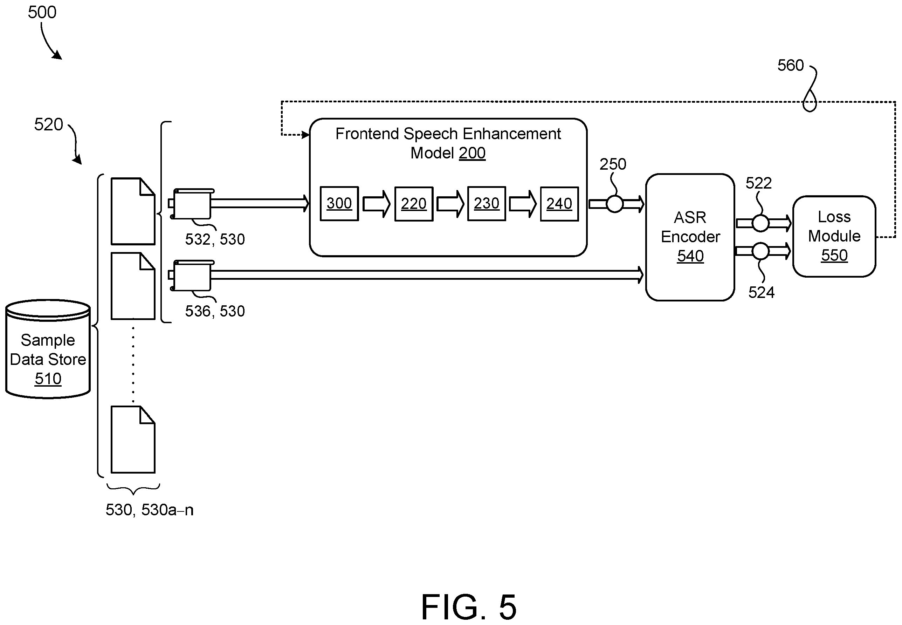

FIG. 5 shows an example training process 500 for computing ASR loss 560 when the frontend speech enhancement model 200 is trained jointly with the ASR model 192. The training process 500 may execute on the remote system 130 of FIG. 1. As shown, the training process 500 obtains one or more training data sets 520 stored in a data store 510 and trains the multichannel neural frontend speech enhancement model 200 on the training data sets 520. The data store 510 may reside on the memory hardware 136 of the remote system 130. Each training data set 520 includes a plurality of training examples, 530, 530a-n, where each training example 530 may include a training utterance 532. Here, only an encoder 540 of the ASR model 192 is used for computing the loss. The ASR loss 560 is computed as the l2 distance between the outputs of the ASR encoder 540 for target features 536 of the training utterance 532 and the enhanced input speech features 250. The ASR encoder 540 is not updated during the training process 500. In detail, the training process 500 computes the ASR loss 560 by generating, using the ASR encoder 540 of the ASR model 192 configured to receive the enhanced input speech features 250 predicted by the frontend speech enhancement model 200 for a training utterance 532 as input, predicted outputs 522 of the ASR encoder 540 for the enhanced input speech features 250, and generating, using the ASR encoder 540 configured to receive target speech features 536 for the training utterance 532 as input, target outputs 524 of the ASR encoder 540 for the target speech features 536. The predicted outputs 522 for the enhanced input speech features 250 and the target outputs 524 for the target speech features 536 may each include respective sequences of LFBE features. Thereafter, the training process 500, via a loss module 550, computes the ASR loss 560 based on the predicted outputs 522 of the ASR encoder 540 for the enhanced input speech features 250 and the target outputs 524 of the ASR encoder 540 for the target speech features 536. The goal of using the ASR loss 560 is to make enhancements to the frontend speech enhancement model 200 to be more attuned to the ASR model 192, which is critical for getting the best performance out of the frontend speech enhancement model 200. By keeping the parameters of the ASR model 192 fixed, the ASR model 192 is decoupled from the frontend speech enhancement model 200, thereby allowing each to be trained and deployed independent of each other.

In some implementations, the frontend speech enhancement model 200 is trained jointly with the ASR model 192 of the backend automatic speech recognition system 180 using a spectral loss and the ASR loss 560. The training target 536 for training the multichannel neural frontend speech enhancement model 200 uses ideal ratio mask (IRM). IRMs may be computed using reverberant speech and reverberant noise based on an assumption that speech and noise are uncorrelated in Mel spectral space as follows:

$$M(t,f) = \frac{X(t,f)}{X(t,f)+N(t,f)} \quad (7).$$

Here, X and N are the reverberant speech and reverberant noise Mel spectrograms, respectively. $t$ and $f$ represent time and Mel frequency bin indices. The choice to estimate IRMs is based on the targets being bounded between [0, 1], simplifying the estimation process. Moreover, the ASR model 192 used for evaluation may be trained on real and simulated reverberant data, resulting in a trained ASR model 192 that is relatively robust to reverberant speech. Therefore, IRMs derived using reverberant speech as the target still provide substantial gains in performance. The spectral loss during training are may be computed based L1 and L2 losses between the IRM and estimated IRM, $\hat{M}$ as follows:

$$\mathcal{L} = \sum_{t,f}\left|M(t,f) - \widehat{M}(t,f)\right| + \left(M(t,f) - \widehat{M}(t,f)\right)^2$$

$$\text{Where L1} = \left|M(t,f) - \widehat{M}(t,f)\right|, \text{ and L2} = \left(M(t,f) - \widehat{M}(t,f)\right)^2 \quad (8)$$

During inference, the estimated IRM is scaled and floored to reduce speech distortion at the expense of reduced noise suppression. This is especially important, since the ASR model 192 is sensitive to speech distortions and non-linear frontend processing, which is one of the main challenges in improving performance of robust ASR models using enhancement frontends. The enhanced feature may be derived as follows:

$$\hat{X}(t,f) = Y(t,f) \odot \max\left(\widehat{M}(t,f), \beta\right)^{\alpha} \quad (9)$$

Here, Y is the noisy Mel spectrogram, $\hat{X}$ is an estimate of clean Mel spectrogram, $\alpha$ and $\beta$ are exponential mask scalars, and mask floor. In some examples, $\alpha$ is set 0.5, and $\beta$ is set to 0.01. The enhanced features may be log-compressed, i.e. $\log(\hat{X})$, and passed to the ASR model 192 for evaluation.

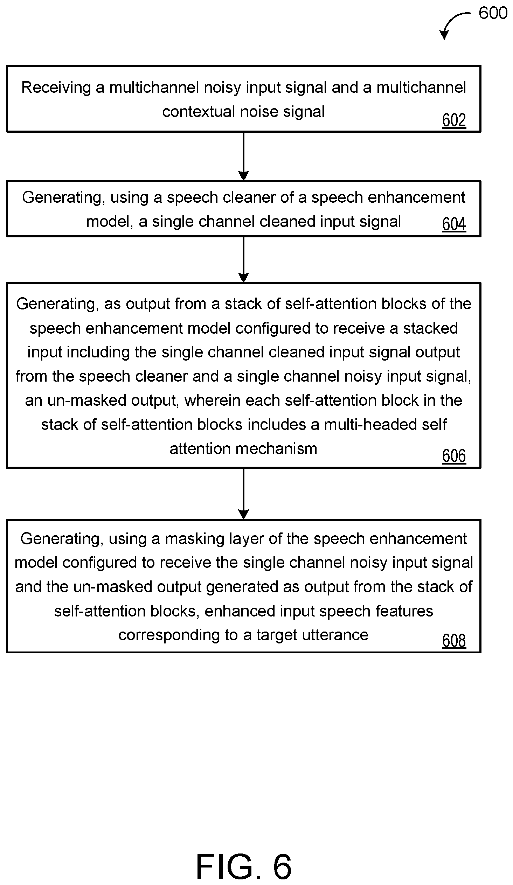

FIG. 6 includes a flowchart of an example arrangement of operations for a method 600 of performing automatic speech recognition using a multichannel neural frontend speech enhancement model 200. At operation 602, the method 600 includes receiving a multichannel noisy input signal 202, and a multichannel contextual noise signal 204. The method 600 also includes, at operation 604, generating, using a speech cleaner 300 of the speech enhancement model 200, a single channel cleaned input signal 340.

At operation 606, the method 600 also includes generating, as output from a stack of self-attention blocks 400 of the speech enhancement model 200 configured to receive a stacked input 232 including the single channel cleaned input signal 340 output from the speech cleaner 300 and a single channel noisy input signal 206, an un-masked output 480. Here, each self-attention block 400 in the stack of self-attention blocks 400 includes a multi-headed self attention mechanism. At operation 608, the method 600 further includes generating, using a masking layer 240 of the speech enhancement model 200 configured to receive the single channel noisy input signal 206 and the un-masked output 480 generated as output from the stack of self-attention blocks 400, enhanced input speech features 250 corresponding to a target utterance 12.

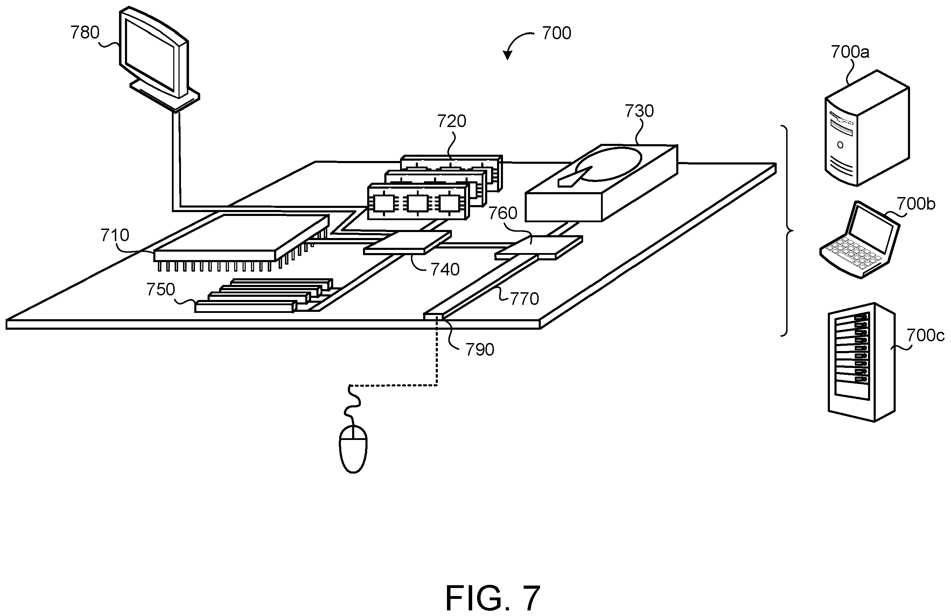

FIG. 7 is schematic view of an example computing device 700 that may be used to implement the systems and methods described in this document. The computing device 700 is intended to represent various forms of digital computers, such as laptops, desktops, workstations, personal digital assistants, servers, blade servers, mainframes, and other appropriate computers. The components shown here, their connections and relationships, and their functions, are meant to be exemplary only, and are not meant to limit implementations of the disclosures described and/or claimed in this document.

The computing device 700 includes a processor 710, memory 720, a storage device 730, a high-speed interface/controller 740 connecting to the memory 720 and high-speed expansion ports 750, and a low speed interface/controller 760 connecting to a low speed bus 770 and a storage device 730. Each of the components 710, 720, 730, 740, 750, and 760, are interconnected using various busses, and may be mounted on a common motherboard or in other manners as appropriate. The processor 710 (e.g., data processing hardware 112, 134 of FIG. 1) can process instructions for execution within the computing device 700, including instructions stored in the memory 720 or on the storage device 730 to display graphical information for a graphical user interface (GUI) on an external input/output device, such as display 780 coupled to high speed interface 740. In other implementations, multiple processors and/or multiple buses may be used, as appropriate, along with multiple memories and types of memory. Also, multiple computing devices 700 may be connected, with each device providing portions of the necessary operations (e.g., as a server bank, a group of blade servers, or a multi-processor system).

The memory 720 (e.g., memory hardware 114, 136 of FIG. 1) stores information non-transitorily within the computing device 700. The memory 720 may be a computer-readable medium, a volatile memory unit(s), or non-volatile memory unit(s). The non-transitory memory 720 may be physical devices used to store programs (e.g., sequences of instructions) or data (e.g., program state information) on a temporary or permanent basis for use by the computing device 700. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

The storage device 730 is capable of providing mass storage for the computing device 700. In some implementations, the storage device 730 is a computer-readable medium. In various different implementations, the storage device 730 may be a floppy disk device, a hard disk device, an optical disk device, or a tape device, a flash memory or other similar solid state memory device, or an array of devices, including devices in a storage area network or other configurations. In additional implementations, a computer program product is tangibly embodied in an information carrier. The computer program product contains instructions that, when executed, perform one or more methods, such as those described above. The information carrier is a computer- or machine-readable medium, such as the memory 720, the storage device 730, or memory on processor 710.

The high speed controller 740 manages bandwidth-intensive operations for the computing device 700, while the low speed controller 760 manages lower bandwidth-intensive operations. Such allocation of duties is exemplary only. In some implementations, the high-speed controller 740 is coupled to the memory 720, the display 780 (e.g., through a graphics processor or accelerator), and to the high-speed expansion ports 750, which may accept various expansion cards (not shown). In some implementations, the low-speed controller 760 is coupled to the storage device 730 and a low-speed expansion port 790. The low-speed expansion port 790, which may include various communication ports (e.g., USB, Bluetooth, Ethernet, wireless Ethernet), may be coupled to one or more input/output devices, such as a keyboard, a pointing device, a scanner, or a networking device such as a switch or router, e.g., through a network adapter.

The computing device 700 may be implemented in a number of different forms, as shown in the figure. For example, it may be implemented as a standard server 700a or multiple times in a group of such servers 700a, as a laptop computer 700b, or as part of a rack server system 700c.

Various implementations of the systems and techniques described herein can be realized in digital electronic and/or optical circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

A software application (i.e., a software resource) may refer to computer software that causes a computing device to perform a task. In some examples, a software application may be referred to as an "application," an "app," or a "program." Example applications include, but are not limited to, system diagnostic applications, system management applications, system maintenance applications, word processing applications, spreadsheet applications, messaging applications, media streaming applications, social networking applications, and gaming applications.

The non-transitory memory may be physical devices used to store programs (e.g., sequences of instructions) or data (e.g., program state information) on a temporary or permanent basis for use by a computing device. The non-transitory memory may be volatile and/or non-volatile addressable semiconductor memory. Examples of non-volatile memory include, but are not limited to, flash memory and read-only memory (ROM) / programmable read-only memory (PROM) / erasable programmable read-only memory (EPROM) / electronically erasable programmable read-only memory (EEPROM) (e.g., typically used for firmware, such as boot programs). Examples of volatile memory include, but are not limited to, random access memory (RAM), dynamic random access memory (DRAM), static random access memory (SRAM), phase change memory (PCM) as well as disks or tapes.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, non-transitory computer readable medium, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

The processes and logic flows described in this specification can be performed by one or more programmable processors, also referred to as data processing hardware, executing one or more computer programs to perform functions by operating on input data and generating output. The processes and logic flows can also be performed by special purpose logic circuitry, e.g., an FPGA (field programmable gate array) or an ASIC (application specific integrated circuit). Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

A number of implementations have been described. Nevertheless, it will be understood that various modifications may be made without departing from the scope of the disclosure. Accordingly, other implementations are within the scope of the following claims.

**Claims**

1. A multichannel neural frontend speech enhancement model (200) for speech recognition, the speech enhancement model (200) comprising:

a speech cleaner (300) configured to:

receive, as input, a multichannel noisy input signal (202) and a multichannel contextual noise signal (204); and
generate, as output, a single channel cleaned input signal (340);

a stack of self-attention blocks (400) each having a multi-headed self attention mechanism, the stack of self-attention blocks (400) configured to:

receive, as input, at an initial block (400) of the stack of self-attention blocks (400), a stacked input (232) comprising the single channel cleaned input signal (340) output from the speech cleaner (300) and a single channel noisy input signal (206); and
generate, as output, from a final block (400) of the stack of self-attention blocks (400), an un-masked output (480); and

a masking layer (240) configured to:

receive, as input, the single channel noisy input signal (206) and the un-masked output (480) generated as output from the final block (400) of the stack of self-attention blocks (400); and
generate, as output, enhanced input speech features (250) corresponding to a target utterance (12).

2. The speech enhancement model (200) of claim 1, wherein the stack of self-attention blocks (400) comprises a stack of Conformer blocks (400), optionally wherein the stack of Conformer blocks (400) comprises four Conformer blocks (400).

3. The speech enhancement model (200) of any of claims 1-2, wherein the speech enhancement model (200) executes on data processing hardware (112) residing on a user device (110), the user device (110) configured to capture the target utterance (12) and the multichannel contextual noise signal (204) via an array of microphones (116) of the user device (110), optionally wherein the speech enhancement model (200) is agnostic to a number of microphones (116) in the array of microphones (116).

4. The speech enhancement model (200) of any of claims 1-3, wherein the speech cleaner (300) executes an adaptive noise cancelation algorithm to generate the single channel cleaned input signal (340) by:

applying a finite impulse response (FIR) filter on all channels (206) of the multichannel noisy input signal (202) except for a first channel (206) of the multichannel noisy input signal (202) to generate a summed output (312); and
subtracting the summed output (312) from the first channel (206) of the multichannel noisy input signal (202).

5. The speech enhancement model (200) of any of claims 1-4, wherein a backend speech system (180) is configured to process the enhanced input speech features (250) corresponding to the target utterance (12), optionally wherein the backend speech system (180) comprises at least one of an automatic speech recognition (ASR) model (192) or an audio or audio-video calling application.

6. The speech enhancement model (200) of any of claims 1-5, wherein the speech enhancement model (200) is trained jointly with a backend automatic speech recognition (ASR) model (192) using a spectral loss and an ASR loss (560), optionally wherein the spectral loss is based on an L1 loss function and L2 loss function distance between an estimated ratio mask and an ideal ratio mask, the ideal ratio mask computed using reverberant speech and reverberant noise.

7. The speech enhancement model (200) of claim 6, wherein the ASR loss (560) is computed by:

generating, using an ASR encoder (540) of the ASR model (192) configured to receive enhanced speech features (250) predicted by the speech enhancement model (200) for a training utterance (532) as input, predicted outputs (522) of the ASR encoder (540) for the enhanced speech features (250);
generating, using the ASR encoder (540) configured to receive target speech features (536) for the training utterance (532) as input, target outputs (524) of the ASR encoder (540) for the target speech features (536); and
computing the ASR loss (560) based on the predicted outputs (522) of the ASR encoder (540) for the enhanced speech features (250) and the target outputs (524) of the ASR encoder (540) for the target speech features (526).

8. A computer-implemented method (600) that when executed on data processing hardware (112, 134) causes the data processing hardware (112, 134) to perform operations comprising:

receiving a multichannel noisy input signal (202) and a multichannel contextual noise signal (204);

generating, using a speech cleaner (300) of a speech enhancement model (200), a single channel cleaned input signal (340);

generating, as output from a stack of self-attention blocks (400) of the speech enhancement model (200) configured to receive a stacked input (232) comprising the single channel cleaned input signal (340) output from the speech cleaner (300) and a single channel noisy input signal (206), an un-masked output (480), wherein each self-attention block (400) in the stack of self-attention blocks (400) comprises a multi-headed self attention mechanism; and

generating, using a masking layer (240) of the speech enhancement model (200) configured to receive the single channel noisy input signal (206) and the un-masked output (480) generated as output from the stack of self-attention blocks (400), enhanced input speech features (250) corresponding to a target utterance (12).

9. The computer-implemented method (600) of claim 8, wherein the stack of self-attention blocks (400) comprises a stack of Conformer blocks (400), optionally wherein the stack of Conformer blocks (400) comprises four Conformer blocks (400).

10. The computer-implemented method (600) of any of claims 8-9, wherein:

the speech cleaner (300), the stack of self-attention blocks (400), and the masking layer (240) execute on the data processing hardware (112); and

the data processing hardware (112) resides on a user device (110), the user device (110) configured to capture the target utterance (12) and the multichannel contextual noise signal (204) via an array of microphones (116) of the user device (110), optionally wherein the speech enhancement model (200) is agnostic to a number of microphones (116) in the array of microphones (116).

11. The computer-implemented method (600) of any of claims 8-10, wherein the operations further comprise executing, using the speech cleaner (300), an adaptive noise cancelation algorithm to generate the single channel cleaned input signal (340) by:

applying a finite impulse response (FIR) filter on all channels (206) of the multichannel noisy input signal (202) except for a first channel (206) of the multichannel noisy input signal (202) to generate a summed output (312); and

subtracting the summed output (312) from the first channel (206) of the multichannel noisy input signal (202).

12. The computer-implemented method (600) of any of claims 8-11, wherein a backend speech system (180) is configured to process the enhanced input speech features (250) corresponding to the target utterance (12), optionally wherein the backend speech system (180) comprises at least one of an automatic speech recognition (ASR) model (192) or an audio or audio-video calling application.

13. The computer-implemented method (600) of any of claims 8-12, wherein the speech enhancement model (200) is trained jointly with a backend automatic speech recognition (ASR) model (192) using a spectral loss and an ASR loss (560).

14. The computer-implemented method (600) of claim 13, wherein the spectral loss is based on an L1 loss function and L2 loss function distance between an estimated ratio mask and an ideal ratio mask, the ideal ratio mask computed using reverberant speech and reverberant noise.

15. The computer-implemented method (600) of claims 12 or 13, wherein the ASR loss (560) is computed by:

generating, using an ASR encoder (540) of the ASR model (192) configured to receive enhanced speech features (250) predicted by the speech enhancement model (200) for a training utterance (532) as input, predicted outputs (522) of the ASR encoder (540) for the enhanced speech features (250);

generating, using the ASR encoder (540) configured to receive target speech features (536) for the training utterance (532) as input, target outputs (524) of the ASR encoder (540) for the target speech features (536); and computing the ASR loss (560) based on the predicted outputs (522) of the ASR encoder (540) for the enhanced speech features (250) and the target outputs (524) of the ASR encoder (540) for the target speech features (536).

## Patentansprüche

1. Mehrkanaliges neuronales Frontend-Sprachverbesserungsmodell (200) für Spracherkennung, wobei das Sprachverbesserungsmodell (200) Folgendes umfasst:

   einen Sprachbereiniger (300), der zu Folgendem konfiguriert ist: Empfangen eines mehrkanaligen verrauschten Eingangssignals (202) und eines mehrkanaligen Kontextrauschsignals (204) als Eingabe; und
   Erzeugen eines einkanaligen, bereinigten Eingangssignals (340) als Ausgabe;
   einen Stapel von Selbstaufmerksamkeitsblöcken (400), die jeweils einen mehrköpfigen Selbstaufmerksamkeitsmechanismus aufweisen, wobei der Stapel von Selbstaufmerksamkeitsblöcken (400) zu Folgendem konfiguriert ist:

   Empfangen einer gestapelten Eingabe (232), umfassend das von dem Sprachbereiniger (300) ausgegebene einkanalige bereinigte Eingangssignal (340) und ein einkanaliges verrauschtes Eingangssignal (206), an einem ersten Block (400) des Stapels von Selbstaufmerksamkeitsblöcken (400) als Eingabe; und
   Erzeugen einer unmaskierten Ausgabe (480) als Ausgabe von einem letzten Block (400) des Stapels von Selbstaufmerksamkeitsblöcken (400); und
   eine Maskierungsschicht (240), die zu Folgendem konfiguriert ist:

   Empfangen des einkanaligen verrauschten Eingangssignals (206) und der als Ausgabe von dem letzten Block (400) des Stapels von Selbstaufmerksamkeitsblöcken (400) erzeugten unmaskierten Ausgabe (480) als Eingabe; und
   Erzeugen einer Zieläußerung (12) entsprechender verbesserter Eingabesprachmerkmale (250) als Ausgabe.

2. Sprachverbesserungsmodell (200) nach Anspruch 1, wobei der Stapel von Selbstaufmerksamkeitsblöcken (400) einen Stapel von Konformerblöcken (400) umfasst, wobei der Stapel von Konformerblöcken (400) optional vier Konformerblöcke (400) umfasst.

3. Sprachverbesserungsmodell (200) nach einem der Ansprüche 1-2, wobei das Sprachverbesserungsmodell (200) auf einer sich auf einer Benutzervorrichtung (110) befindenden Datenverarbeitungshardware (112) ausgeführt wird, wobei die Benutzervorrichtung (110) zum Erfassen der Zieläußerung (12) und des mehrkanaligen Kontextrauschsignals (204) über ein Array von Mikrofonen (116) der Benutzervorrichtung (110) konfiguriert ist, wobei das Sprachverbesserungsmodell (200) optional eine Anzahl von Mikrofonen (116) in dem Array von Mikrofonen (116) nicht erkennt.

4. Sprachverbesserungsmodell (200) nach einem der Ansprüche 1-3, wobei der Sprachbereiniger (300) zum Erzeugen des einkanaligen bereinigten Eingangssignals (340) einen adaptiven Rauschunterdrückungsalgorithmus ausführt durch:

   Anwenden eines Filters mit endlicher Impulsantwort (FIR) auf alle Kanäle (206) des mehrkanaligen verrauschten Eingangssignals (202) mit Ausnahme des ersten Kanals (206) des mehrkanaligen verrauschten Eingangssignals (202) zum Erzeugen einer summierten Ausgabe (312); und
   Subtrahieren der summierten Ausgabe (312) von dem ersten Kanal (206) des mehrkanaligen verrauschten Eingangssignals (202).

5. Sprachverbesserungsmodell (200) nach einem der Ansprüche 1-4, wobei ein Backend-Sprachsystem (180) zum Verarbeiten der der Zieläußerung (12) entsprechenden verbesserten Eingabesprachmerkmale (250) konfiguriert ist, wobei das Backend-Sprachsystem (180) optional mindestens eines von einem Modell für automatische Spracherkennung (ASR) (192) oder einer Audio- oder Audio-Video-Anrufanwendung umfasst.

6. Sprachverbesserungsmodell (200) nach einem der Ansprüche 1-5, wobei das Sprachverbesserungsmodell (200) gemeinsam mit einem Backend-Modell für automatische Spracherkennung (ASR) (192) unter Verwendung eines Spektralverlusts und eines ASR-Verlusts (560) trainiert wird, wobei der Spektralverlust optional auf einem Abstand von L1-Verlustfunktion und L2-Verlustfunktion zwischen einer geschätzten Verhältnismaske und einer idealen Verhältnismaske basiert, wobei die ideale Verhältnismaske unter Verwendung von halliger Sprache und halligem Rauschen berechnet wird.

7. Sprachverbesserungsmodell (200) nach Anspruch 6, wobei der ASR-Verlust (560) berechnet wird durch:

Erzeugen von vorhergesagten Ausgaben (522) eines ASR-Codierers (540) für die verbesserten Sprachmerkmale (250) unter Verwendung des ASR-Codierers (540) des ASR-Modells (192), der zum Empfangen von durch das Sprachverbesserungsmodell (200) vorhergesagten verbesserten Sprachmerkmalen (250) für eine Trainingsäußerung (532) als Eingabe konfiguriert ist;

Erzeugen von Zielausgaben (524) des ASR-Codierers (540) für Zielsprachmerkmale (536) unter Verwendung des ASR-Codierers (540), der zum Empfangen der Zielsprachmerkmale (536) für die Trainingsäußerung (532) als Eingabe konfiguriert ist; und

Berechnen des ASR-Verlustes (560) basierend auf den vorhergesagten Ausgaben (522) des ASR-Codierers (540) für die verbesserten Sprachmerkmale (250) und den Zielausgaben (524) des ASR-Codierers (540) für die Zielsprachmerkmale (526).

8. Computerimplementiertes Verfahren (600), das beim Ausführen auf Datenverarbeitungshardware (112, 134) die Datenverarbeitungshardware (112, 134) zum Durchführen von Vorgängen veranlasst, umfassend:

Empfangen eines mehrkanaligen verrauschten Eingangssignals (202) und eines mehrkanaligen Kontextrauschsignals (204);

Erzeugen eines einkanaligen bereinigten Eingangssignals (340) unter Verwendung eines Sprachbereinigers (300) eines Sprachverbesserungsmodells (200);

Erzeugen einer unmaskierten Ausgabe (480) als Ausgabe von einem Stapel von Selbstaufmerksamkeitsblöcken (400) des Sprachverbesserungsmodells (200), der zum Empfangen einer gestapelten Eingabe (232), umfassend das von dem Sprachbereiniger (300) ausgegebene einkanalige bereinigte Eingangssignal (340) und ein einkanaliges verrauschtes Eingangssignal (206), konfiguriert ist, wobei jeder Selbstaufmerksamkeitsblock (400) in dem Stapel von Selbstaufmerksamkeitsblöcken (400) einen mehrköpfigen Selbstaufmerksamkeitsmechanismus umfasst; und

Erzeugen von einer Zieläußerung (12) entsprechenden verbesserten Eingabesprachmerkmalen (250) unter Verwendung einer Maskierungsschicht (240) des Sprachverbesserungsmodells (200), die zum Empfangen des einkanaligen verrauschten Eingangssignals (206) und der als Ausgabe von dem Stapel von Selbstaufmerksamkeitsblöcken (400) erzeugten unmaskierten Ausgabe (480) konfiguriert ist.

9. Computerimplementiertes Verfahren (600) nach Anspruch 8, wobei der Stapel von Selbstaufmerksamkeitsblöcken (400) einen Stapel von Konformerblöcken (400) umfasst, wobei der Stapel von Konformerblöcken (400) optional vier Konformerblöcke (400) umfasst.

10. Computerimplementiertes Verfahren (600) nach einem der Ansprüche 8-9, wobei:

der Sprachbereiniger (300), der Stapel von Selbstaufmerksamkeitsblöcken (400) und die Maskierungsschicht (240) auf der Datenverarbeitungshardware (112) ausgeführt werden; und

sich die Datenverarbeitungshardware (112) auf einer Benutzervorrichtung (110) befindet, wobei die Benutzervorrichtung (110) zum Erfassen der Zieläußerung (12) und des mehrkanaligen Kontextrauschsignals (204) über ein Array von Mikrofonen (116) der Benutzervorrichtung (110) konfiguriert ist, wobei das Sprachverbesserungsmodell (200) optional eine Anzahl von Mikrofonen (116) in dem Array von Mikrofonen (116) nicht erkennt.

11. Computerimplementiertes Verfahren (600) nach einem der Ansprüche 8-10, wobei die Vorgänge ferner Ausführen eines adaptiven Rauschunterdrückungsalgorithmus unter Verwendung des Sprachbereinigers (300) zum Erzeugen des einkanaligen bereinigten Eingangssignals (340) umfassen durch:

Anwenden eines Filters mit endlicher Impulsantwort (FIR) auf alle Kanäle (206) des mehrkanaligen verrauschten Eingangssignals (202) mit Ausnahme des ersten Kanals (206) des mehrkanaligen verrauschten Eingangssignals (202) zum Erzeugen einer summierten Ausgabe (312); und

Subtrahieren der summierten Ausgabe (312) von dem ersten Kanal (206) des mehrkanaligen verrauschten Eingangssignals (202).

12. Computerimplementiertes Verfahren (600) nach einem der Ansprüche 8-11, wobei ein Backend-Sprachsystem (180) zum Verarbeiten der der Zieläußerung (12) entsprechenden verbesserten Eingabesprachmerkmale (250) konfiguriert ist, wobei das Backend-Sprachsystem (180) optional mindestens eines von einem automatischen Spracherkennungsmodell (ASR-Modell) (192) oder einer Audio- oder Audio-Video-Anrufanwendung umfasst.

13. COMPUTERIMPLEMENTIERTES VERFAHREN (600) NACH EINEM DER ANSPRÜCHE 8-12, WOBEI DAS SPRACHVERBESSERUNGSMODELL (200) GEMEINSAM MIT EINEM BACKEND-MODELL FÜR AUTOMATISCHE SPRACHERKENNUNG (ASR) (192) UNTER VERWENDUNG EINES SPEKTRALVERLUSTS UND EINES ASR-VERLUSTS (560) TRAINIERT WIRD.

14. Computerimplementiertes Verfahren (600) nach Anspruch 13, wobei der Spektralverlust auf einem Abstand von L1-Verlustfunktion und L2-Verlustfunktion zwischen einer geschätzten Verhältnismaske und einer idealen Verhältnismaske basiert, wobei die ideale Verhältnismaske unter Verwendung von halliger Sprache und halligem Rauschen berechnet wird.

15. Computerimplementiertes Verfahren (600) nach Anspruch 12 oder 13, wobei der ASR-Verlust (560) berechnet wird durch:

Erzeugen von vorhergesagten Ausgaben (522) eines ASR-Codierers (540) für die verbesserten Sprachmerkmale (250) unter Verwendung des ASR-Codierers (540) des ASR-Modells (192), der zum Empfangen von durch das Sprachverbesserungsmodell (200) vorhergesagten verbesserten Sprachmerkmalen (250) für eine Trainingsäußerung (532) als Eingabe konfiguriert ist;
Erzeugen von Zielausgaben (524) des ASR-Codierers (540) für Zielsprachmerkmale (536) unter Verwendung des ASR-Codierers (540), der zum Empfangen der Zielsprachmerkmale (536) für die Trainingsäußerung (532) als Eingabe konfiguriert ist; und
Berechnen des ASR-Verlustes (560) basierend auf den vorhergesagten Ausgaben (522) des ASR-Codierers (540) für die verbesserten Sprachmerkmale (250) und den Zielausgaben (524) des ASR-Codierers (540) für die Zielsprachmerkmale (536).

## Revendications

1. Modèle d'amélioration vocal à interface frontale neuronale multicanal (200) pour la reconnaissance vocale, le modèle d'amélioration vocal (200) comprenant :
un nettoyeur vocal (300) configuré pour :

recevoir, en entrée, un signal d'entrée bruyant multicanal (202) et un signal de bruit contextuel multicanal (204) ; et
générer, en sortie, un signal d'entrée nettoyé monocanal (340) ;
une pile de blocs d'auto-attention (400) ayant chacun un mécanisme d'auto-attention multi-têtes, la pile de blocs d'auto-attention (400) étant configurée pour :

recevoir, en entrée, au niveau d'un bloc initial (400) de la pile de blocs d'auto-attention (400), une entrée empilée (232) comprenant le signal d'entrée nettoyé monocanal (340) issu du nettoyeur vocal (300) et un signal d'entrée bruyant monocanal (206) ; et
générer, en sortie, à partir d'un bloc final (400) de la pile de blocs d'auto-attention (400), une sortie non masquée (480) ; et
une couche de masquage (240) configurée pour :

recevoir, en entrée, le signal d'entrée bruyant monocanal (206) et la sortie non masquée (480) générée en sortie du bloc final (400) de la pile de blocs d'auto-attention (400) ; et
générer, en sortie, des caractéristiques vocales d'entrée améliorées (250) correspondant à un énoncé cible (12).

2. Modèle d'amélioration vocal (200) selon la revendication 1, dans lequel la pile de blocs d'auto-attention (400) comprend une pile de blocs Conformer (400), éventuellement dans lequel la pile de blocs Conformer (400) comprend quatre blocs Conformer (400).

3. Modèle d'amélioration vocal (200) selon l'une quelconque des revendications 1 et 2, dans lequel le modèle d'amélioration vocal (200) s'exécute sur du matériel de traitement de données (112) résidant sur un dispositif utilisateur (110), le dispositif utilisateur (110) étant configuré pour capturer l'énoncé cible (12) et le signal de bruit contextuel multicanal (204) par l'intermédiaire d'un réseau de microphones (116) du dispositif utilisateur (110), éventuellement dans lequel le modèle d'amélioration vocal (200) est agnostique à un nombre de microphones (116) dans le réseau de microphones (116).

4.  Modèle d'amélioration de la parole (200) selon l'une quelconque des revendications 1 à 3, dans lequel le nettoyeur vocal (300) exécute un algorithme adaptatif d'annulation de bruit pour générer le signal d'entrée nettoyé monocanal (340) par :

    l'application d'un filtre à réponse impulsionnelle finie (FIR) sur tous les canaux (206) du signal d'entrée bruyant multicanal (202) à l'exception d'un premier canal (206) du signal d'entrée bruyant multicanal (202) pour générer une sortie sommée (312) ; et
    la soustraction de la sortie sommée (312) à partir du premier canal (206) du signal d'entrée bruyant multicanal (202).

5.  Modèle d'amélioration vocal (200) selon l'une quelconque des revendications 1 à 4, dans lequel un système vocal dorsal (180) est configuré pour traiter les caractéristiques vocales d'entrée améliorées (250) correspondant à l'énoncé cible (12), éventuellement dans lequel le système vocal dorsal (180) comprend au moins l'un d'un modèle de reconnaissance vocale automatique (ASR) (192) ou d'une application d'appel audio ou audio-vidéo.

6.  Modèle d'amélioration vocal (200) selon l'une quelconque des revendications 1 à 5, dans lequel le modèle d'amélioration vocal (200) est entraîné conjointement avec un modèle de reconnaissance vocale automatique (ASR) dorsal (192) à l'aide d'une perte spectrale et d'une perte ASR (560), éventuellement dans lequel la perte spectrale est basée sur une fonction de perte L1 et une distance de fonction de perte L2 entre un masque de rapport estimé et un masque de rapport idéal, le masque de rapport idéal étant calculé à l'aide de parole réverbérée et de bruit réverbéré.

7.  Modèle d'amélioration vocal (200) selon la revendication 6, dans lequel la perte ASR (560) est calculée par :

    la génération, à l'aide d'un codeur ASR (540) du modèle ASR (192) configuré pour recevoir des caractéristiques vocales améliorées (250) prédites par le modèle d'amélioration vocal (200) pour un énoncé d'apprentissage (532) en tant qu'entrée, de sorties prédites (522) du codeur ASR (540) pour les caractéristiques vocales améliorées (250) ;
    la génération, à l'aide du codeur ASR (540) configuré pour recevoir des caractéristiques vocales cibles (536) pour l'énoncé d'apprentissage (532) en tant qu'entrée, de sorties cibles (524) du codeur ASR (540) pour les caractéristiques vocales cibles (536) ; et
    le calcul de la perte ASR (560) sur la base des sorties prédites (522) du codeur ASR (540) pour les fonctionnalités vocales améliorées (250) et des sorties cibles (524) du codeur ASR (540) pour les caractéristiques vocales cibles (526).

8.  Procédé mis en œuvre par ordinateur (600) qui lorsqu'il est exécuté sur du matériel de traitement de données (112, 134) amène le matériel de traitement de données (112, 134) à réaliser des opérations comprenant :

    la réception d'un signal d'entrée bruyant multicanal (202) et d'un signal de bruit contextuel multicanal (204) ;
    la génération, à l'aide d'un nettoyeur vocal (300) d'un modèle d'amélioration vocal (200), d'un signal d'entrée nettoyé monocanal (340) ;
    la génération, en sortie d'une pile de blocs d'auto-attention (400) du modèle d'amélioration vocal (200) configuré pour recevoir une entrée empilée (232) comprenant le signal d'entrée nettoyé monocanal (340) issu du nettoyeur vocal (300) et un signal d'entrée bruyant monocanal (206), d'une sortie non masquée (480), dans lequel chaque bloc d'auto-attention (400) de la pile de blocs d'auto-attention (400) comprend un mécanisme d'auto-attention multi-têtes ; et
    la génération, à l'aide d'une couche de masquage (240) du modèle d'amélioration vocal (200) configuré pour recevoir le signal d'entrée bruyant monocanal (206) et la sortie non masquée (480) générée comme sortie de la pile de blocs d'auto-attention (400), de caractéristiques vocales d'entrée améliorées (250) correspondant à un énoncé cible (12).

9.  Procédé mis en œuvre par ordinateur (600) selon la revendication 8, dans lequel la pile de blocs d'auto-attention (400) comprend une pile de blocs Conformer (400), éventuellement dans lequel la pile de blocs Conformer (400) comprend quatre blocs Conformer (400).

10. Procédé mis en œuvre par ordinateur (600) selon l'une quelconque des revendications 8 et 9, dans lequel :

le nettoyeur vocal (300), la pile de blocs d'auto-attention (400), et la couche de masquage (240) s'exécutent sur le matériel de traitement de données (112) ; et
le matériel de traitement de données (112) réside sur un dispositif utilisateur (110), le dispositif utilisateur (110) étant configuré pour capturer l'énoncé cible (12) et le signal de bruit contextuel multicanal (204) par l'intermédiaire d'un réseau de microphones (116) du dispositif utilisateur (110), éventuellement dans lequel le modèle d'amélioration vocal (200) est agnostique à un nombre de microphones (116) dans le réseau de microphones (116).

11. Procédé mis en œuvre par ordinateur (600) selon l'une quelconque des revendications 8 à 10, dans lequel les opérations comprennent également l'exécution, à l'aide du nettoyeur vocal (300), d'un algorithme adaptatif d'annulation de bruit pour générer le signal d'entrée nettoyé monocanal (340), par :

l'application d'un filtre à réponse impulsionnelle finie (FIR) sur tous les canaux (206) du signal d'entrée bruyant multicanal (202) à l'exception d'un premier canal (206) du signal d'entrée bruyant multicanal (202) pour générer une sortie sommée (312) ; et
la soustraction de la sortie sommée (312) à partir du premier canal (206) du signal d'entrée bruyant multicanal (202).

12. Procédé mis en œuvre par ordinateur (600) selon l'une quelconque des revendications 8 à 11, dans lequel un système vocal dorsal (180) est configuré pour traiter les caractéristiques vocales d'entrée améliorées (250) correspondant à l'énoncé cible (12), éventuellement dans lequel le système vocal dorsal (180) comprend au moins l'un d'un modèle de reconnaissance vocale automatique (ASR) (192) ou d'une application d'appel audio ou audio-vidéo.

13. Procédé mis en œuvre par ordinateur (600) selon l'une quelconque des revendications 8 à 12, dans lequel le modèle d'amélioration vocal (200) est entraîné conjointement avec un modèle de reconnaissance vocal automatique (ASR) dorsal (192) à l'aide d'une perte spectrale et d'une perte ASR (560).

14. Procédé mis en œuvre par ordinateur (600) selon la revendication 13, dans lequel la perte spectrale est basée sur une fonction de perte L1 et une distance de fonction de perte L2 entre un masque de rapport estimé et un masque de rapport idéal, le masque de rapport idéal étant calculé à l'aide de la parole réverbérante et du bruit réverbérant.

15. Procédé mis en œuvre par ordinateur (600) selon les revendications 12 ou 13, dans lequel la perte ASR (560) est calculée par :

la génération, à l'aide d'un codeur ASR (540) du modèle ASR (192) configuré pour recevoir des caractéristiques vocales améliorées (250) prédites par le modèle d'amélioration vocal (200) pour un énoncé d'apprentissage (532) en tant qu'entrée, de sorties prédites (522) du codeur ASR (540) pour les caractéristiques vocales améliorées (250) ;
la génération, à l'aide du codeur ASR (540) configuré pour recevoir des caractéristiques vocales cibles (536) pour l'énoncé d'apprentissage (532) en tant qu'entrée, de sorties cibles (524) du codeur ASR (540) pour les caractéristiques vocales cibles (536) ; et
le calcul de la perte ASR (560) sur la base des sorties prédites (522) du codeur ASR (540) pour les fonctionnalités vocales améliorées (250) et des sorties cibles (524) du codeur ASR (540) pour les caractéristiques vocales cibles (536).

FIG. 1

FIG. 2

EP 4 476 726 B1

FIG. 3

EP 4 476 726 B1

400

480

Layernorm
450

444

405, 405d
c

442

Feed Forward
440

434

405, 405c
c

432

Convolution Layer
430

424

405, 405b
c

422

Multi-Head Self Attention
420

414

405, 405a
c

412

Feed Forward
410

232

FIG. 4

FIG. 5

EP 4 476 726 B1

600

Receiving a multichannel noisy input signal and a multichannel contextual noise signal    602

Generating, using a speech cleaner of a speech enhancement model, a single channel cleaned input signal    604

Generating, as output from a stack of self-attention blocks of the speech enhancement model configured to receive a stacked input including the single channel cleaned input signal output from the speech cleaner and a single channel noisy input signal, an un-masked output, wherein each self-attention block in the stack of self-attention blocks includes a multi-headed self attention mechanism    606

Generating, using a masking layer of the speech enhancement model configured to receive the single channel noisy input signal and the un-masked output generated as output from the stack of self-attention blocks, enhanced input speech features corresponding to a target utterance    608

# FIG. 6

FIG. 7

EP 4 476 726 B1

**REFERENCES CITED IN THE DESCRIPTION**

**Patent documents cited in the description**

- WO 2021013345 A1